# EUROPÄISCHE PATENTSCHRIFT

(11) **EP 0 847 886 B1**
(45) Veröffentlichungstag und Bekanntmachung des Hinweises auf die Patenterteilung: **08.12.2004**
(21) Anmeldenummer: 97119315.6
(22) Anmeldetag: 05.11.1997
(51) Int. Cl.: B60H 1/00

(54) **Drehschieber zum Steuern eines Fluids**
Fluid control rotary valve
Valve rotative de commande de fluide

(30) Priorität: 12.12.1996 DE 19651622
(43) Veröffentlichungstag der Anmeldung: 17.06.1998
(73) Patentinhaber: Behr GmbH & Co., 70469 Stuttgart (DE)
(72) Erfinder: Baruschke, Wilhelm, Dipl.-Ing., 73117 Wangen (DE); Käfer, Oliver, Dipl.-Ing., 71711 Murr (DE); Lochmahr, Karl, 71665 Vaihingen (DE)

(56) Entgegenhaltungen:
- EP-A- 0 434 634
- DE-A- 3 416 335
- DE-B- 1 010 342
- US-A- 5 531 248

## Beschreibung

Die Erfindung betrifft einen Drehschieber zum Steuern eines Fluids nach dem Oberbegriff des Patentanspruchs 1 bzw. 2.

Drehschieber sind zum Steuern bzw. zum Regeln eines Fluids allgemein bekannt. So ist beispielsweise aus der **EP 0 541 995 A1** ein Drehschieber einer Heizungsanlage eines Kraftfahrzeugs bekannt, bei dem ein Fluid innerhalb eines Kreislaufs zu einem Fahrzeugmotor und/oder zu einem Heizkörper förderbar ist. Ferner ist aus der **DE 43 24 749 A1** ein Drehschieber als Regelventil bekannt, das einen in einer Ventilkammer drehbar gelagerten Ventilkörper aufweist, der sich bereichsweise in Umfangsrichtung der Ventilkammer erstreckt. Die Zu- bzw. Abläufe des bekannten Drehschiebers sind sternförmig zueinander angeordnet, wobei die Längsachsen derselben in Richtung der Drehachse des Ventilkörpers zusammenlaufen. Nachteilig an dem bekannten Drehschieber ist jedoch, daß die Zu- und Abläufe des Drehschiebers sternförmig zueinander angeordnet sind. Ein Drehschieber mit parallelen Zu- bzw. Abläufen ist z.B aus US-B-5 531 248 bekannt.

Aufgabe der vorliegenden Erfindung ist es, einen Drehschieber zum Steuern eines Fluids anzugeben, der einen verringerten Platzbedarf gewährleistet und einen fast linearen Verlauf der Heizungskennlinie ermöglicht. Zur Lösung dieser Aufgabe weist die Erfindung die Merkmale des Patentanspruchs 1 bzw. 2 auf.

Durch die koaxiale bzw. achsparallele Anordnung der Zu- oder Abläufe des Drehschiebers läßt sich auf einfache Weise ein Drehschieber verwirklichen, der platzsparend innerhalb eines Fluidkreislaufs anordbar ist. Beispielsweise kann der Drehschieber platzsparend als integrierter Bestandteil eines Heizungsrohrsystems innerhalb eines Kraftfahrzeugs eingesetzt werden. Dabei dient der Drehschieber zur Steuerung bzw. Regelung der Durchflußmenge des Fluids von dem Kraftfahrzeugmotor zu dem Heizkörper und vice versa.

Erfindungsgemäß wird der asymptotische Anstieg der Durchflußmenge bei Verdrehen des Ventilkörpers aus der Schließposition durch eine Ausbuchtung in einem Bereich des Ablaufs bzw. der Ventilkammer ermöglicht. Vorteilhaft kann diese Ausbuchtung in einem Endbereich einen Anschlag bilden, an dem der Ventilkörper in der Schließposition anliegt.

In Weiterbildung der Erfindung ist der Ventilkörper konkavähnlich ausgebildet, so daß in der Schließposition desselben ein Bypasskanal gebildet wird zur Umlenkung des Kühlfluids von dem Zulauf in Richtung des Ablaufs. Dabei ermöglicht die konkave Form des Ventilkörpers einen homogenen Durchfluß des Kühlfluids durch die Ventilkammer.

In Ausgestaltung der Erfindung weist die Ventilkammer einen nach innnen ragenden Anschlag auf, der die Stellung des Ventilkörpers in der Öffnungsposition festlegt. Darüber hinaus bewirkt dieser Anschlag in der Schließposition des Ventils einen Druckabfall, der dem des in der Öffnungsposition angeschlossenen Wärmeübertragers entspricht, so daß annähernd ein gleicher Druckabfall in jeder Position des Ventils aufrechterhalten werden kann. Auf diese Weise werden Druckspitzen im Kühlmittelkreislauf vermieden.

Erfindungsgemäß ist der Ventilkörpers alternativ schwalbenschwanzförmig ausgebildet mit einem ersten Ventilarm und einem gegenüberliegenden zweiten Ventilarm, wobei sich der erste Ventilarm in Umfangsrichtung über einen spitzen Winkel erstreckt. Durch diese Maßnahme wird erreicht, daß bei Verdrehung des Ventilkörpers von einer Schließposition in eine Öffnungsposition die Durchflußmenge des Fluids im wesentlichen parabelförmig ansteigt. Im Zusammenwirken mit der Heizkörper-Kennlinie ergibt sich daraus ein fast linearer Verlauf der Heizleistungskurve über den Drehwinkel. Infolgedessen kann bei Betätigung des Drehschiebers eine fast lineare Heizleistungs-Kennlinie ermöglicht werden.

Nach einer Ausgestaltung der Erfindung entspricht der Durchmesser der Ventilkammer im wesentlichen dem zweifachen Rohrdurchmesser der Zu- bzw. Abläufe. Hierdurch wird eine platzsparende Ausbildung des Drehschiebers geschaffen, wobei die Quererstreckung der Ventilkammer von dem notwendigen Abstand zweier benachbarter Rohre vorgegeben ist.

In Ausgestaltung der Erfindung kann die Ventilkammer einstückig mit den von dieser abgehenden als Zu- bzw. Abläufe ausgebildeten Rohren verbunden sein. Alternativ kann die Ventilkammer auch über eine an sich bekannte Flanschverbindung mit den entsprechenden Rohren verbunden sein.

Weitere Vorteile der Erfindung ergeben sich aus den weiteren Unteransprüchen.

Ein Ausführungsbeispiel der Erfindung wird nachfolgend anhand der Zeichnung näher erläutert.

Es zeigen:
- **Fig. 1**: Einen Querschnitt durch einen Drehschieber in einer Schließposition,
- **Fig. 2**: einen Querschnitt durch den Drehschieber in der Öffnungsposition,
- **Fig. 3a**: eine Heizkennlinie eines an den Drehschieber angeschlossenen Wärmeübertragers und
- **Fig. 3b**: ein Kennlinienverlauf des Drehschiebers in Abhängigkeit von einem Öffnungswinkel α.

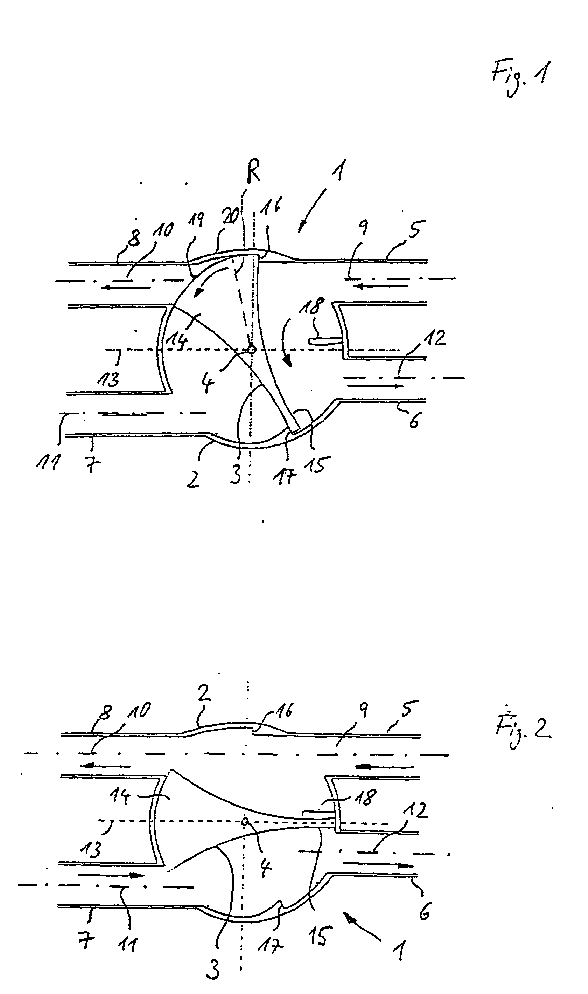

**Fig. 1** zeigt einen Drehschieber 1, der zur Steuerung oder Regelung der Durchflußmenge eines Fluids von einem Fahrzeugmotor zu einem Heizkörper dient. Der Drehschieber 1 besteht aus einer zylinderförmigen Ventilkammer 2, in der ein Ventilkörper 3 um eine Drehachse 4 drehbar gelagert ist. Der Ventilkörper 3 kann manuell oder motorisch, insbesondere durch elektrischen Antrieb eines Schrittmotors verdreht werden. Etwa in einer Ebene erstrecken sich motorseitig ein Zulauf und ein Ablauf 6 sowie heizkörperseitig ein Zulauf 7 und ein Ablauf 8. Diese Zu- bzw. Abläufe 5, 6, 7 und 8 erstrecken sich als Rohre hin zu einem nichtdargstellten Fahrzeugmotor bzw. einem nichtdargestellten Heizkörper einer Heizungs- oder Klimaanlage. Die Zu- bzw. Abläufe 5, 6, 7 und 8 sind einstückig mit dem Ventilkörper 3 verbunden. Eine Längsachse 9 des Zulaufs 5 ist koaxial zu einer Längsachse 10 des heizkörperseitigen Ablaufs 8 angeordnet. Eine Längsachse 11 des heizkörperseitigen Zulaufs 7 ist achsparallel zu einer Längsachse 12 des motorseitigen Ablaufs 6 angeordnet. Die Längsachsen 9, 10, 11, 12 sind jeweils parallel zu einer Geraden 13 angeordnet, die die Drehachse 4 des Ventilkörpers 3 schneidet. Dabei verlaufen die Längsachsen 8, 9 oberhalb der Geraden 13 und die Längsachsen 11, 12 unterhalb der Geraden 13.

Der Ventilkörper 3 ist schwalbenschwanzförmig ausgebildet und weist einen sich in Umfangsrichtung über einen spitzen Winkel erstreckenden ersten Ventilarm 14 und einen dünnen zweiten gegenüberliegenden Ventilarm 15 auf. Wie aus Fig. 1 zu ersehen ist, weist die Ventilkammer 2 einen obenseitig ausgeformten ersten Anschlag 16 und einen untenseitig ausgeformten zweiten Anschlag 17 auf, an denen jeweils Kanten des ersten Ventilarms 14 bzw. des zweiten Ventilarms 15 in der Schließposition zur Anlage kommen.

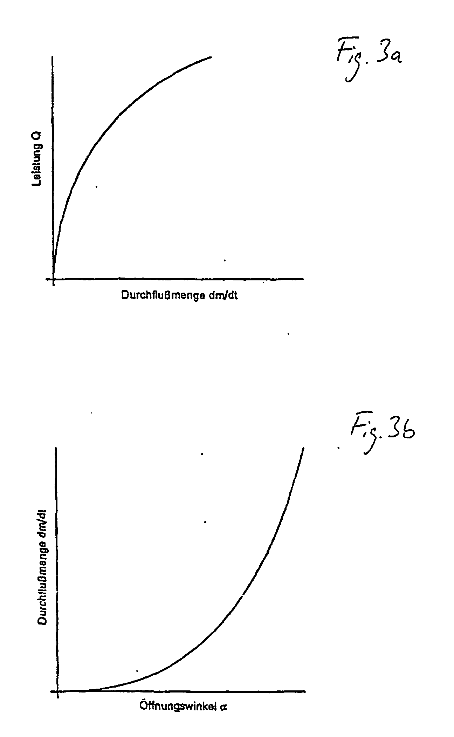

Zur Erreichung einer in **Fig. 2** dargestellten Öffnungsposition wird der Ventilkörper 3 gegen den Uhrzeigersinn verdreht, bis ein Randbereich des zweiten Ventilarms 15 gegen einen nach innen von der Ventilkammer 2 abragenden Anschlag 18 stößt. In dieser Lage ist der Öffnungsquerschnitt der Zu- bzw. Abläufe 5, 6, 7, 8 vollständig geöffnet. In der Schließposition nach Fig. 1 wird der Öffnungsquerschnitt des Ablaufs 8 vollständig durch eine bogenförmige Mantelfläche 19 des ersten Ventilarms 14 abgedeckt, so daß sich keine heizkörperseitige Strömung über den heizkörperseitigen Zulauf 7 und dem heizkörperseitigen Ablauf 8 ausbilden kann. In der Schließposition des Drehschiebers 1 wirkt dieser als Bypass, wobei das Fluid - vom Motor kommend - durch den Zulauf 5 unter Umlenkung desselben durch den Ablauf 6 zurück zum Motor fließen kann.

In der Öffnungsposition des Drehschiebers kommt es infolge der Fluiddurchströmung des Heizkörpers zu einem Druckabfall. Um gleichmäßige Betriebsbedingungen auch in der Schließposition zu gewährleisten, ist der Anschlag 18 in Richtung der Drehachse 4 abragend von der Ventilkammer 2 angeordnet. Seine radiale Erstreckung ist derart gewählt, daß die damit verbundene Querschnittsverengung dem Druckabfall des Fluids durch den Heizkörper in der Öffnungsposition entspricht. Hierdurch läßt sich weiter die Regelcharakteristik des Drehschiebers 1 verbessern.

Der nach innen abragende Anschlag 18 bewirkt überdies einen Druckabfall in der Schließposition des Drehschiebers 1, der dem Druckabfall des Heizkörpers in der Öffnungsposition entspricht. Auf diese Weise wird in jeder Position des Ventilkörpers 3 das Auftreten von Druckspitzen im Kühlmittelkreislauf vermieden. Darüber hinaus wird beim Verdrehen des Ventilkörpers 3 aus der Schließposition in eine Öffnungsposition eine Kurzschlußströmung unter Umgehung des Heizkörpers wirksam vermieden. Alternativ kann dieser aufgezwungene Druckabfall auch durch eine Ausbuchtung an dem Ventilkörper 3 erzeugt werden. Dies hätte jedoch strömungstechnische Nachteile bei der Umlenkung des Kühlmittelstroms in der Schließposition.

Nach dem beschriebenen, bevorzugten Ausführungsbeispiel ist der Ventilkörper 3 zumindest motorseitig konkavförmig ausgebildet, so daß eine homogene Strömungsumlenkung in der Schließposition des Drehschiebers 1 ermöglicht wird.

**Fig. 3a** zeigt eine Kennlinie des an den Drehschieber 1 angeschlossenen Heizkörpers. Hieraus ist erkennbar, daß mit ansteigender Durchflußmenge die Leistung in einem Anfangsbereich sehr stark ansteigt, wohingegen in einem weiteren Verlauf die Kennlinie zunehmend abflacht. **Fig. 3b** zeigt die Kennlinie des Drehschiebers 1, wobei auf der Abszisse der Öffnungswinkel α und auf der Koordinate die Durchflußmenge angegeben ist. Die Kennlinie des Drehschiebers 1 steigt in einem Anfangsbereich nach und nach mit einer kleinen Steigung asymptotisch an und weist in einem Endbereich die größte Steigung auf. Dieser langsame asymptotische Anstieg der Durchflußmenge wird durch eine Ausbuchtung 20 erzielt, die sich in Verlängerung des Ablaufs 8 als Bestandteil der Ventilkammer 2 über einen Umfangsbereich derselben erstreckt. In dem Bereich der Ausbuchtung 20 weist die Ventilkammer 2 einen größeren Radius R auf als in einem anderen Umfangsbreich. Die Ausbuchtung 20 vergrößert den Öffnungsquerschnitt des Ablaufs 8, wobei der Öffnungsquerschnitt des Ablaufs 8 zu der Umfangsfläche der bogenförmigen Mantelfläche 19 korrespondiert. Mit Verdrehen des Ventilkörpers 3 aus der Schließposition wird der Öffnungsquerschnitt des Ablaufs 8 langsam erhöht, so daß auch nur eine geringe Durchflußmenge in Richtung des Ablaufs 8 fließen kann. Dieser Anfangsbereich, in dem die Durchflußmenge einen geringen Anstieg aufweist, umfaßt zumindest einen Öffnungswinkelbereich vom 0° - 20°. Vorteilhaft wird dieser langsame Anstieg der Durchflußmenge in einem Anfangsbereich dadurch unterstützt, daß sich der Ablauf 8 bezüglich einer Mittelebene der Ventilkammer 2 in einem spitzen Winkel befindet. Schon allein durch diese Anordnung ändert sich der Öffnungsquerschnitt des Ablaufs 8 langsamer als beispielsweise bei einer Anordnung, in der die Längsachse 10 des Ablaufs 8 die Drehachse 4 bzw. die Symmetrieachse der Ventilkammer 2 schneidet. Je größer der spitze Winkel zwischen dem Ablauf 8 und der Mittelebene der Ventilkammer 2 ist, desto langsamer steigt die Ventilkennlinie gemäß Fig. 3b an. Nach dem vorliegenden Ausführungsbeispiel ermöglicht zum einen die Anordnung des Ablaufs 8 bezüglich der Mittelebene der Ventilkammer 2 und zum anderen die Ausbildung einer Ausbuchtung 20 eine solche Drehschieberkennlinie gemäß Fig. 3b, die den starken Anstieg der Heizkörperkennlinie gemäß Fig. 3a in einem Anfangsbereich kompensiert und somit im Ergebnis einen im wesentlichen linearen Verlauf der Heizkörperkennlinie bewirkt. Auf diese Weise kann die Leistung des Heizkörpers linear über den Öffnungswinkel α eingestellt werden. Die Heizleistung kann somit durch lineare Betätigung des Drehschiebers 1 weitgehend linear gesteuert werden.

Der Ventilkörper 3 ist vorzugsweise mit einem Elektromotor verbunden. Alternativ kann der Ventilkörper 3 auch manuell oder durch einen Hubmagnet verstellt werden. Die Anschläge 16, 17, 18 bewirken eine definierte Endstellung des Ventilkörpers 3.

## Patentansprüche

1. Drehschieber zum Steuern eines Fluids in einem mindestens einen Wärmeübertrager aufweisenden Kreislauf, insbesondere in einem einen Heizkörper aufweisenden Kreislauf eines Kraftfahrzeugs, mit einem in einer Ventilkammer (2) drehbar gelagerten Ventilkörper (3), der sich bereichsweise in Umfangsrichtung der Ventilkammer (2) erstreckt, und mit mindestens drei Zu- und/oder Abläufen (5, 6, 7, 8) von Kanälen, die in Abhängigkeit von der Stellung des Ventilkörpers (3) verschließbar und/oder öffnend ausgebildet sind, wobei die Zu- und die Abläufe (5, 6, 7, 8) im wesentlichen koaxial oder achsparallel zueinander angeordnet sind und wobei die Drehachse (4) des Ventilkörpers (3) eine zu den Längsachsen (9, 10, 11, 12) der Zu- bzw. Abläufe (5, 6, 7, 8) parallele Gerade (13) schneidet,
**dadurch gekennzeichnet, dass**
die Ventilkammer (2) im Bereich eines der Abläufe (5, 6, 7, 8) eine Ausbuchtung (20) aufweist, so dass beim Verdrehen des Ventilkörpers (3) aus der Schließposition ein asymptotischer Anstieg der Durchflußmenge durch den Ablauf (8) bewirkbar ist.

2. Drehschieber zum Steuern eines Fluids in einem mindestens einen Wärmeübertragers aufweisenden Kreislauf, insbesondere in einem einen Heizkörper aufweisenden Kreislauf eines Kraftfahrzeugs, mit einem in einer Ventilkammer (2) drehbar gelagerten Ventilkörper (3), der sich bereichsweise in Umfangsrichtung der Ventilkammer (2) erstreckt, und mit mindestens drei Zu- und/oder Abläufen (5, 6, 7, 8) von Kanälen, die in Abhängigkeit von der Stellung des Ventilkörpers (3) verschließbar und/oder öffnend ausgebildet sind, wobei die Zu- und die Abläufe (5, 6, 7, 8) im wesentlichen koaxial oder achsparallel zueinander angeordnet sind und wobei die Drehachse (4) des Ventilkörpers (3) eine zu den Längsachsen (9, 10, 11, 12) der Zu- bzw. Abläufe (5, 6, 7, 8) parallel Gerade (13) schneidet,
**dadurch gekennzeichnet, dass**
der Ventilkörper (3) mit einem ersten Ventilarm (14) und einem gegenüberliegenden zweiten Ventilarm (15) ausgeführt ist, wobei sich der erste Ventilarm (14) in Umfangsrichtung über einen spitzen Winkel erstreckt und der Ventilkörper schwalbenschwanzförmig ausgebildet ist und sich ausgehend von dem Rand des ersten Ventilarms bis zu dem Rand des zweiten Ventilarms verjüngt.

3. Drehschieber nach Anspruch 1 oder 2, **dadurch gekennzeichnet, daß** die Gerade (13) zwischen den Längsachsen (9, 10) eines Zulaufs (5) und eines Ablaufs (8) einerseits und den Längsachsen (11, 12) eines weiteren Zulaufs (7) und eines weiteren Ablaufs (6) andererseits verläuft.

4. Drehschieber nach Anspruch 1, 2 oder 3, **dadurch gekennzeichnet, daß** der einem Ablauf (8) zugeordnete erste Ventilarm (14) derart in Umfangsrichtung erstreckt, daß der Öffnungsquerschnitt des Ablaufs (8) verschließbar ist.

5. Drehschieber nach einem der Ansprüche 1, 3 oder 4, **dadurch gekennzeichnet, daß** die Ausbuchtung (20) durch einen Kreissektor über einen Umfangsbereich der Ventilkammer (2) mit einem Radius (R) gebildet ist, der größer ist als in einem anderen Umfangsbereich der Ventilkammer (2).

6. Drehschieber nach einem der Ansprüche 1 oder 3-5, **dadurch gekennzeichnet, daß** die Ausbuchtung (20) einen Anschlag (16) für den Ventilkörper (3) in einer Schließposition bildet.

7. Drehschieber nach einem der Ansprüche 1 bis 6, **dadurch gekennzeichnet, daß** dem zweiten Ventilarm (15) zwei Anschläge (17, 18) der Ventilkammer (2) zugeordnet sind, derart, daß der Ventilkörper (3) von einer Öffnungsposition in eine Schließposition oder vice versa einen spitzen Winkel überstreicht.

8. Drehschieber nach einem der Ansprüche 1 bis 7, **dadurch gekennzeichnet, daß** der Ventilkörper (3) durch einen elektrisch angetriebenen Schrittmotor betätigbar ist.

9. Drehschieber nach einem der Ansprüche 1 bis 8, **dadurch gekennzeichnet, daß** der Durchmesser der Ventilkammer (2) im wesentlichen dem zweifachen Rohrdurchmesser der Zu- bzw. Abläufe (5, 6, 7, 8) entspricht.

10. Drehschieber nach einem der Ansprüche 1 bis 9, **dadurch gekennzeichnet, daß** sich der Ventilkörper (3) in der Schließposition von einem Bereich des Zulaufs (5) in Höhe der Mittelebene konkav in Richtung des Ablaufs (6) erstreckt.

11. Kühlkreislauf, insbesondere für ein Kraftfahrzeug, mit einem Wärmeübertrager, insbesondere einem Heizkörper,
**gekennzeichnet durch**
einen Drehschieber (1) nach einem der Ansprüche 1 bis 10.

12. Kühlkreislauf nach Anspruch 11, **dadurch gekennzeichnet, daß** sich ein Anschlag (18) im Drehschieber (1) derart in Richtung der Drehachse (4) eines Ventilkörpers (3) erstreckt, dass der Druckabfall in der Schließposition des Ventilkörpers (3) dem Druckabfall des Wärmeübertragers in der Öffnungsposition des Ventilkörpers (3) entspricht.

## Claims

1. Rotary valve for controlling a fluid in a circuit incorporating at least one heat transmitter, in particular a circuit of a motor vehicle incorporating a heating body, with a valve body (3) mounted in a valve chamber (2) so as to rotate, at least certain regions of which extend towards the circumference of the valve chamber (2), and with at least three inlets and/or outlets (5, 6, 7, 8) of ducts which can be opened and/or closed depending on the position of the valve body (3), the inlets and outlets (5, 6, 7, 8) being disposed in an essentially coaxial arrangement or with their axes parallel with one another, and the rotation axis (4) of the valve body (3) intersects a straight line (13) parallel with the longitudinal axes (9, 10, 11, 12) of the inlets and outlets (5, 6, 7, 8),
**characterised in that**
the valve chamber (2) has a bulge (20) in the region of one of the outlets (5, 6, 7, 8) so that a rotation of the valve body (3) from the closed position causes an asymptotic increase in the quantity flowing through the outlet (8).

2. Rotary valve for controlling a fluid in a circuit incorporating at least one heat exchanger, in particular in a circuit of a motor vehicle incorporating a heating body, with a valve body (3) mounted in a valve chamber (2) mounted so as to rotate, at least certain regions of which extend towards the circumference of the valve chamber (2), and with at least three inlets and/or outlets (5, 6, 7, 8) of ducts which can be opened and/or closed depending on the position of the valve body (3), the inlets and outlets (5, 6, 7, 8) being disposed in an essentially coaxial arrangement or with their axes parallel with one another, and the rotation axis (4) of the valve body (3) intersects a straight line (13) parallel with the longitudinal axes (9, 10, 11, 12) of the inlets and outlets (5, 6, 7, 8),
**characterised in that**
the valve body (3) has a first valve arm (14) and an oppositely lying second valve arm (15) and the first valve arm (14) extends in the circumferential direction subtending an acute angle and the valve body has a dovetail shape, tapering from the edge of the first valve arm to the edge of the second valve arm.

3. Rotary valve as claimed in claim 1 or 2, **characterised in that** the straight line (13) extends between the longitudinal axes (9, 10) of an inlet (5) and an outlet (8), one the one hand, and the longitudinal axes (11, 12) of another inlet (7) and another outlet (6), on the other hand.

4. Rotary valve as claimed in claim 1, 2 or 3, **characterised in that** the first valve arm (14) co-operating with an outlet (8) extends in the circumferential direction in such a way that the opening cross section of the outlet (8) can be closed.

5. Rotary valve as claimed in one of claims 1, 3 or 4, **characterised in that** the bulge (20) is formed by a circle segment across the circumferential region of the valve chamber (2), the radius (R) of which is bigger than in another circumferential region of the valve chamber (2).

6. Rotary valve as claimed in one of claims 1 or 3 to 5, **characterised in that** the bulge (20) constitutes a stop (16) for the valve body (3) in a closed position.

7. Rotary valve as claimed in one of claims 1 to 6, **characterised in that** two stops (17, 18) of the valve chamber (2) co-operate with the second valve arm (15) so that the valve body (3) travels across an acute angle from an open position into a closed position or vice versa.

8. Rotary valve as claimed in one of claims 1 to 7, **characterised in that** the valve body (3) is operable by means of an electrically driven stepper motor.

9. Rotary valve as claimed in one of claims 1 to 8, **characterised in that** the diameter of the valve chamber (2) essentially corresponds to two times the tube diameter of the inlets and outlets (5, 6, 7, 8).

10. Rotary valve as claimed in one of claims 1 to 9, **characterised in that**, in the closed position, the valve body (3) extends in a concave arrangement from a region of the inlet (5) on a level with the mid-plane in the direction towards the outlet (6).

11. Cooling circuit, in particular for a motor vehicle incorporating a heat transmitter, in particular a heating body,
**characterised by**
a rotary valve (1) as claimed in one of claims 1 to 10.

12. Cooling circuit as claimed in claim 11, **characterised in that** a stop (18) in the rotary valve (1) extends in the direction towards the rotation axis (4) of a valve body (3) such that the drop in pressure of the heat transmitter corresponds to the open position of the valve body (3).

## Revendications

1. Valve rotative pour la commande d'un fluide, dans un circuit présentant au moins un circuit présentant au moins un élément de transfert de chaleur, en particulier dans un circuit, présentant un corps chauffant, d'un véhicule automobile, avec un corps de soupape ou opercule (3) monté à rotation dans une chambre à soupape (2), corps s'étendant par zones dans la direction périphérique de la chambre de soupape (2), et avec au moins trois amenées et/ou évacuations (5, 6, 7, 8) de canaux, réalisées de façon à pouvoir se fermer et/ou s'ouvrir en fonction de la position de l'opercule (3), les amenées et les évacuations (5, 6, 7, 8) étant disposées sensiblement coaxialement ou à axes parallèles entre elles, et l'axe de rotation (4) de l'opercule (3) coupant une droite (13) parallèle aux axes longitudinaux (9, 10, 11, 12) des amenées, respectivement des évacuations (5, 6, 7, 8), **caractérisée en ce que** la chambre de soupape (2) présente, dans la zone d'une des évacuations (5, 6, 7, 8), une bosse sortante (20), de sorte que, lors de la rotation de l'opercule (3) depuis la position de fermeture, une augmentation asymptotique du débit passant par l'évacuation (8) puisse être provoquée.

2. Valve rotative pour la commande d'un fluide, dans un circuit présentant au moins un circuit présentant au moins un élément de transfert de chaleur, en particulier dans un circuit, présentant un corps chauffant, d'un véhicule automobile, avec un corps de soupape ou opercule (3) monté à rotation dans une chambre à soupape (2), corps s'étendant par zones dans la direction périphérique de la chambre de soupape (2), et avec au moins trois amenées et/ou évacuations (5, 6, 7, 8) de canaux, réalisées de façon à pouvoir se fermer et/ou s'ouvrir en fonction de la position de l'opercule (3), les amenées et les évacuations (5, 6, 7, 8) étant disposées sensiblement coaxialement ou à axes parallèles entre elles, et l'axe de rotation (4) de l'opercule (3) coupant une droite (13) parallèle aux axes longitudinaux (9, 10, 11, 12) des amenées, respectivement des évacuations (5, 6, 7, 8), **caractérisée en ce que** l'opercule (3) est réalisé avec un premier bras de soupape (14) et un deuxième bras de soupape (15) opposé, le premier bras de soupape (14) s'étendant dans la direction périphérique sur un angle aigu, et l'opercule étant conformée en queue d'aronde et allant en s'effilant en évoluant depuis le bord du premier bras de soupape jusqu'au bord du deuxième bras de soupape.

3. Valve rotative selon la revendication 1 ou 2, **caractérisée en ce que** la droite (13) s'étend entre les axes longitudinaux (8, 9) d'une amenée (5) et d'une évacuation (8), d'une part, et les axes longitudinaux (11, 12) d'une deuxième amenée (7) et d'une autre évacuation (6), d'autre part.

4. Valve rotative selon la revendication 1, 2 ou 3, **caractérisée en ce que** le premier bras de soupape (14), associé à une évacuation (8), s'étend en direction périphérique de manière que la section transversale d'ouverture de l'évacuation (8) puisse être fermée.

5. Valve rotative selon l'une des revendications 1, 3 ou 4, **caractérisée en ce que** la bosse sortante (20) est formée par un secteur de cercle, sur une plage périphérique de la chambre de soupape (2) d'un rayon (R) supérieur à ce qu'il est dans une autre plage périphérique de la chambre de soupape (2).

6. Valve rotative selon l'une des revendications 1 ou 3 à 5, **caractérisée en ce que** la bosse sortante (20) forme une butée (16) pour l'opercule (3) en une position de fermeture.

7. Valve rotative selon l'une des revendications 1 à 6, **caractérisée en ce qu'**au deuxième bras (15) sont associées deux butées (17, 18) de la chambre de soupape (2), de manière que l'opercule (3) parcoure un angle aigu, lorsqu'il se déplace d'une position d'ouverture à une position de fermeture ou vice versa.

8. Valve rotative selon l'une des revendications 1 à 7, **caractérisée en ce que** l'opercule (3) peut être actionné par un moteur pas à pas à entraînement électrique.

9. Valve rotative selon l'une des revendications 1 à 8, **caractérisée en ce que** le diamètre de la chambre de soupape (2) correspond essentiellement au double du diamètre du tube des amenées, respectivement des évacuations (5, 6, 7, 8).

10. Valve rotative selon l'une des revendications 1 à 9, **caractérisée en ce que** l'opercule (3) s'étend à hauteur du plan médian de façon concave dans la direction d'évacuation (6), en une position de fermeture, depuis une zone de l'amenée (5).

11. Circuit de refroidissement, en particulier pour un véhicule automobile, avec un élément de transfert de chaleur, en particulier un corps chauffant, **caractérisé par** une valve rotative (1) selon l'une des revendications 1 à 10.

12. Circuit de refroidissement selon la revendication 11, **caractérisé en ce qu'**une butée (18) s'étend dans la valve rotative (1), dans la direction de l'axe de rotation (4) d'un opercule (3), de manière que la chute de pression à la position de fermeture de l'opercule (3) corresponde à la chute de pression de l'élément de transfert de chaleur à la position d'ouverture de l'opercule (3).
